# EUROPÄISCHE PATENTANMELDUNG

(11) **EP 4 603 978 A1**
(43) Veröffentlichungstag der Anmeldung: **20.08.2025**
(21) Anmeldenummer: 24157631.3
(22) Anmeldetag: 14.02.2024
(51) Int. Cl.: G06F 11/20, G06F 11/00

(54) **COMPUTER-IMPLEMENTIERTES VERFAHREN ZUM BESTIMMEN VON MINDESTENS EINER KONFIGURATION AUS EINER MEHRZAHL VON KONFIGURATIONEN FÜR EIN TECHNISCHES SYSTEM**

(71) Anmelder: Siemens Aktiengesellschaft, 80333 München (DE)
(72) Erfinder: Rothbauer, Stefan, 86156 Augsburg (DE); Salecker, Jürgen, 81827 München (DE)
(74) Vertreter: Siemens Patent Attorneys

(57) **Zusammenfassung**

Die Erfindung betrifft ein computer-implementiertes Verfahren zum Bestimmen von mindestens einer Konfiguration aus einer Mehrzahl von Konfigurationen für ein technisches System, wobei das technische System eine Mehrzahl von Hardwarekomponenten und/oder Softwarekomponenten aufweist, die Mehrzahl der Konfigurationen mindestens eine Konfiguration für ein redundantes technisches System aufweist, wobei das redundante technische System ein Primärsystem und mindestens ein Sekundärsystem als mindestens eine Instanz des Primärsystems aufweist, aufweisend die Schritte: a. Bereitstellen von mindestens einer Bedingung (S1); b. Bewerten von mindestens einer vordefinierten Anforderung für jede Konfiguration der Mehrzahl der Konfigurationen (S2); c. Bewerten von mindestens einem Ausfallrisiko des technischen Systems für jede Konfiguration der Mehrzahl der Konfigurationen (S3); und d. Bestimmen der mindestens einen Konfiguration aus der Mehrzahl der Konfigurationen auf Basis der mindestens einen bewerteten Anforderung und des mindestens einen bewerteten Ausfallrisikos unter Einhaltung der mindestens einen Bedingung und Berücksichtigung von mindestens einem vordefinierten Kriterium (S4); und e. Bereitstellen der bestimmten mindestens einen Konfiguration als optimale Konfiguration (S5).

Ferner betrifft die Erfindung ein technisches System und ein entsprechendes Computerprogrammprodukt.

## Beschreibung

### 1. Technisches Gebiet

Die Erfindung betrifft ein computer-implementiertes Verfahren zum Bestimmen von mindestens einer Konfiguration aus einer Mehrzahl von Konfigurationen für ein technisches System. Ferner ist die Erfindung auf ein entsprechendes technisches System und ein Computerprogrammprodukt gerichtet.

### 2. Stand der Technik

Redundante technische Systeme sind aus dem Stand der Technik bekannt. Der Begriff "Redundanz" bedeutet die Verdoppelung oder Vervielfachung eines technischen Systems (auch Primärsystem genannt). Dementsprechend sind gleiche technische Komponenten, meist auch Datensätze mehrfach parallel vorhanden. Die redundanten technischen Komponenten werden bei einem störungsfreien Betrieb im Normalfall nicht benötigt. Der Vorteil liegt darin, dass das Primärsystem bei einer Störung nicht zum völligen Erliegen kommt, sondern ein Ersatzsystem (auch Sekundärsystem genannt) vorhanden ist, das den weiteren Betrieb gewährleistet. Mit anderen Worten kommt das Sekundärsystem zum Einsatz, wenn das Primärsystem ausfällt. Es kann nahtlos oder zeitnah auf ein funktionierendes System umgeschaltet werden. Im Idealfall entstehen somit keine Ausfallzeiten. Die Verfügbarkeit, die Zuverlässigkeit und die Sicherheit werden folglich erhöht.

Diese bekannte Architekturlösung gemäß dem Stand der Technik hat jedoch auch erhebliche Nachteile. Ein Nachteil dieser Architekturlösung besteht darin, dass das Sekundärsystem üblicherweise ebenfalls durchgängig im Betrieb ist. Dies erzeugt laufende Betriebskosten und ist auch im Sinne der Nachhaltigkeit, wie hinsichtlich Energie- und Ressourcenverbrauch, nicht optimal. Darüber hinaus wird das Sekundärsystem üblicherweise ebenso beansprucht und abgenützt wie das Primärsystem. Folglich kann es dadurch dazu kommen, dass das Sekundärsystem kurz nach Übernahme der Aufgaben des Primärsystems ebenfalls ausfällt, da beide aufgrund der gleichen Nutzung bereits am Lebensdauerende angekommen sind.

Meist können der Ressourcenverbrauch und die Betriebskosten bei den meisten redundanten Systemen vernachlässigt werden, falls der redundante Anteil im Gesamtsystem einen untergeordneten Anteil ausmacht.

Bekannte Ansätze adressieren gemäß dem Stand der Technik im anderen Fall bislang nur vereinzelt die oben genannten Nachteile. Der gleichmäßigen Abnutzung kann beispielsweise mithilfe weiterer redundanter Systemteile entgegengewirkt werden, die für den eigentlichen redundanten Betrieb nicht benötigt werden. Diese weiteren redundanten Systemteile können zyklisch durchgewechselt werden. Dadurch können bewusst Ungleichheiten in der Nutzungszeit oder Betriebszeit einzelner Systemteile erzeugt werden, so dass nicht alle vorhandenen Systeme gleichzeitig am Lebensdauerende ankommen. Dies erfordert jedoch, dass zusätzliche Systemteile verwendet werden und erhöht weiterhin die Redundanz. Dadurch werden die Ressourcen und die Kosten jedoch noch mehr erhöht.

Weiterhin gibt es in vielen Systemen und Anwendungen absehbare Zeiten, in denen eine solche Architekturlösung nicht durchgängig benötigt wird. In diesen Fällen entstehen unnötig Kosten und ein erheblicher Ressourcenverbrauch, die nicht durch die Anforderungen aus der Anwendung gerechtfertigt sind.

Das Bewusstsein steigt ferner zunehmend dafür, dass technische Systeme im Gegensatz zu diesem bekannten Ansatz gerade ressourcenschonend ausgestaltet werden, insbesondere der CO2-Fußabdruck verringert wird.

Es ist daher eine Herausforderung eine Lösung bereitzustellen, die nicht die benötigten Ressourcen, die Kosten und die Betriebsmittel mehr als notwendig vervielfacht ohne die durch die Redundanz angestrebten Vorteile (wie höhere Verfügbarkeit, Zuverlässigkeit, Sicherheit) zu verlieren.

Die vorliegende Erfindung stellt sich daher die Aufgabe ein computer-implementiertes Verfahren zum Bestimmen von mindestens einer Konfiguration aus einer Mehrzahl von Konfigurationen für ein technisches System bereitzustellen, welches effizienter und zuverlässiger ist.

### 3. Zusammenfassung der Erfindung

Die oben genannte Aufgabe wird erfindungsgemäß durch ein computer-implementiertes Verfahren zum Bestimmen von mindestens einer Konfiguration aus einer Mehrzahl von Konfigurationen für ein technisches System gelöst, wobei
das technische System eine Mehrzahl von Hardwarekomponenten und/oder Softwarekomponenten aufweist, wobei
die Mehrzahl der Konfigurationen mindestens eine Konfiguration für ein redundantes technisches System aufweist, wobei
dass mindestens eine redundante technische System ein Primärsystem und mindestens ein Sekundärsystem als mindestens eine Instanz des Primärsystems aufweist,
aufweisend die Schritte:
   a. Bereitstellen von mindestens einer Bedingung;
   b. Bewerten von mindestens einer vordefinierten Anforderung für jede Konfiguration der Mehrzahl der Konfigurationen;
   c. Bewerten von mindestens einem Ausfallrisiko des technischen Systems für jede Konfiguration der Mehrzahl der Konfigurationen;
   d. Bestimmen der mindestens eine Konfiguration aus der Mehrzahl der Konfigurationen auf Basis der mindestens einen bewerteten Anforderung und des mindestens einen bewerteten Ausfallrisikos unter Einhaltung der mindestens einen Bedingung und Berücksichtigung von mindestens einem vordefinierten Kriterium (S4); und
   e. Bereitstellen der bestimmten mindestens eine Konfiguration als optimale Konfiguration.

Dementsprechend ist die Erfindung auf ein Verfahren zum Bestimmen der Konfiguration aus der Mehrzahl der Konfigurationen für das technisches System gerichtet. Mit anderen Worten wird eine optimale Konfiguration des technischen Systems ermittelt. Das technische System umfasst die Hardwarekomponenten und/oder die Softwarekomponenten. Beispielhafte technische Systeme sind autonome Transportmittel, wie autonomer Zug und autonomes Fahrzeug, sowie industrielle Anlagen. Die Mehrzahl der Konfigurationen umfasst eine Konfiguration für ein redundantes technisches System. Das redundante technische System umfasst das Primärsystem und das mindestens eine Sekundärsystem.

Die ermittelte optimale Konfiguration ist bevorzugt eine Konfiguration für ein redundantes technisches System.

Das computer-implementierte Verfahren und somit die Ermittlung der optimalen Konfiguration kann kontinuierlich erfolgen. Alternativ kann das Verfahren zeitlich, ereignisbasiert und/oder Streckenbasiert etc. erfolgen. Beispielsweise kann das Verfahren durch eine Nutzeranfrage initiiert werden.

In einem ersten Verfahrensschritt wird die Bedingung bereitgestellt. Die Bedingung kann als Einschränkung oder Vorgabe ausgelegt werden. Die Bedingung kann eine anwendungsspezifische Bedingung oder eine Randbedingung sein. Beispielhafte Bedingungen sind gesetzliche und vertragliche Vorgaben, wie Vorgaben hinsichtlich der Sicherheitsziele, der Verfügbarkeitsziele und/oder der Zuverlässigkeitsziele.

Die Eingabedaten können über eine oder mehrere Eingabeschnittstellen empfangen werden. Zusätzlich können die Ausgabedaten, wie die bestimmte Konfiguration als optimale Konfiguration, auch über eine oder mehrere Ausgabeschnittstellen gesendet werden. Dadurch wird eine effiziente Datenübertragung zwischen Recheneinheiten gewährleistet.

In einem weiteren Verfahrensschritt erfolgt eine erste Bewertung. Für jede Konfiguration der Mehrzahl der Konfigurationen erfolgt die Bewertung der Anforderung.

In einem weiteren Verfahrensschritt erfolgt eine zweite Bewertung. Für jede Konfiguration der Mehrzahl der Konfigurationen erfolgt die Bewertung des Ausfallrisikos. Diese Bewertung kann beispielsweise erfolgen indem aus Daten des Einsatzes bestehender technischer Systeme mit gleichem oder hinreichend ähnlichem Anwendungszweck gelernt wird, welches Ausfallrisiko bestand oder welche Gefährdungen wie häufig auftraten. Alternativ oder zusätzlich können Daten des Einsatzes bestehender technischer Systeme aus Betriebsdaten des technischen Systems und Daten zum Kontext (wie Umgebungsbedingungen) ermittelt werden, wie häufig Systemausfälle auftraten, die eine Redundanz benötigen. Alternativ oder zusätzlich kann die Bewertung regelbasiert erfolgen. Beispielsweise können bei bekannten Anwendungsfällen jeweils die Sicherheitsziele, die Verfügbarkeitsziele und/oder die Zuverlässigkeitsziele definiert werden.

Eine oder mehrere Konfigurationen werden aus der Mehrzahl der Konfigurationen bestimmt und als optimale Konfiguration bereitgestellt. Die Bestimmung der optimalen Konfiguration erfolgt basierend auf den resultierenden Ergebnissen aus den erfolgten zwei Bewertungen. Dabei werden die Bedingung und das Kriterium beachtet. Das Kriterium kann dabei eine bestimmte Eigenschaft sein, bevorzugt in Bezug auf die oben adressierte Nachhaltigkeit, wie der Ressourcenverbrauch, die Energie und/oder der CO2-Fußabdruck. Beispielhafte Kriterien sind die Betriebskosten, die Abnutzung des technischen Systems, die Ressourcen des technischen Systems und die Lebensdauer des technischen Systems. Mittels des Kriteriums kann eine Bewertung des Aufwands für das Ändern der Konfiguration versus des erreichbaren Nutzens erfolgen.

Die bestimmte optimale Konfiguration kann eine Konfiguration für ein redundantes technisches System oder aber auch eine Konfiguration für das technische System ohne Redundanz sein. Die Redundanz kann sich hinsichtlich des vorbestimmten Kriteriums als vorteilhaft oder nachteilhaft erweisen.

Mit anderen Worten wird die eine oder die mehreren optimalen Konfigurationen, bevorzugt Redundanzkonfigurationen, ausgewählt. Die ausgewählten Konfigurationen können Konfigurationen für das technische System ohne Redundanz oder Redundanzkonfigurationen sein. Dabei ist die Redundanzkonfiguration eine Konfiguration für das redundanten technische System.

Die vorliegende Erfindung stellt folglich sicher, dass eine oder mehrere Konfigurationen als optimale Konfiguration für das technische System effizient und zuverlässig ermittelt wird. Die Konfiguration wird vorteilhafterweise dynamisch ermittelt in Abhängigkeit vom Kriterium. Dadurch ist eine hohe Flexibilität gewährleistet. Die optimale Konfiguration schont und verringert somit auch die Ressourcen, die Kosten und die Betriebsmittel ohne die durch die Redundanz angestrebten Vorteile (höhere Verfügbarkeit, Zuverlässigkeit, Sicherheit) zu vernachlässigen.

In einer Ausgestaltung ist die mindestens eine Bedingung anwendungsspezifisch oder abhängig vom redundanten technischen System.

In einer weiteren Ausgestaltung ist die mindestens eine vordefinierte Anforderung eine Anforderung ausgewählt aus der Gruppe bestehend aus ein Sicherheitsziel, ein Verfügbarkeitsziel und ein Zuverlässigkeitsziel.

In einer weiteren Ausgestaltung ist die Bewertung der mindestens eine vordefinierte Anforderung eine allgemeine Bewertung und/oder eine spezifische Bewertung.

In einer weiteren Ausgestaltung basiert die allgemeine Bewertung auf einer Risikoanalyse und/oder einer Gefährdungsanalyse. Dementsprechend wird eine allgemeine Bewertung durchgeführt. Die geltenden Sicherheitsziele, Verfügbarkeitsziele und/oder Zuverlässigkeitsziele können bewertet werden, beispielsweise basierend auf einer Risikoanalyse und/oder Gefährdungsanalyse.

In einer weiteren Ausgestaltung umfasst die spezifische Bewertung das Aktualisieren der mindestens eine Anforderung, bevorzugt unter Berücksichtigung von Kontextdaten.

Dementsprechend wird eine spezifische Bewertung durchgeführt. Die geltenden Sicherheitsziele, die Verfügbarkeitsziele und/oder die Zuverlässigkeitsziele können aktualisiert werden, bevorzugt unter Nutzung von Kontextdaten. Mit anderen Worten erfolgt ein Update. Beispielhafte Kontextdaten sind ein Systemeinsatzplan, wie der Streckenverlauf und die dort notwendigen Sicherheitsziele, die Zuverlässigkeitsziele und/oder Verfügbarkeitsziele bei einem autonomen Zug als technisches System.

In einer weiteren Ausgestaltung ist die Bewertung des mindestens einen Ausfallrisikos eine allgemeine Bewertung und/oder eine spezifische Bewertung.

In einer weiteren Ausgestaltung ist die allgemeine Bewertung eine Systemanalyse und/oder eine modellbasierte Bewertung. Dementsprechend wird eine allgemeine Bewertung durchgeführt. Die allgemeine Bewertung kann auf der Systemanalyse und/oder der modellbasierten Bewertung basieren.

In einer weiteren Ausgestaltung umfasst die spezifische Bewertung das Aktualisieren der allgemeinen Bewertung des mindestens einen Ausfallrisikos auf Basis von mindestens einer Modellvorhersage bezüglich einer sicher bekannten oder einer mit Unsicherheiten behafteten Systemanwendung, bevorzugt unter Berücksichtigung von Kontextdaten. Dementsprechend wird eine spezifische Bewertung durchgeführt. Die Bewertung wird auf Basis der Modellvorhersagen bezüglich der sicher bekannten oder mit Unsicherheiten behafteten Systemanwendung unter Nutzung von Kontextdaten durchgeführt. Mit anderen Worten erfolgt ein Update. Beispielhafte Kontextdaten sind die Daten hinsichtlich des technischen Systems, wie der Systemzustand, die bisherige Einsatzzeit und/oder die Auswirkungen auf die Abnutzung des technischen Systems, die Daten der Umgebung, wie Temperatur und die Wetterbedingungen, die das gegenwärtige Ausfallrisiko betreffen, sowie die Kenntnis des geplanten zukünftigen Einsatzes des technischen Systems, wie die Intensität oder Art der Nutzung des technischen Systems.

In einer weiteren Ausgestaltung erfolgt die Aktualisierung mittels Maschinellem Lernen. Dementsprechend wird das Update in einem gegebenen Kontext mittels eines Machine-Learning-Modells durchgeführt.

In einer weiteren Ausgestaltung weist das computer-implementierte Verfahren weiterhin auf
- Ausgeben der bestimmten mindestens eine Konfiguration als optimale Konfiguration und/oder zugehöriger Daten auf einer Anzeigeeinheit,
- Speichern der bestimmten mindestens eine Konfiguration als optimale Konfiguration und/oder zugehöriger Daten in einer Speichereinheit, und/oder
- Übermitteln der bestimmten mindestens eine Konfiguration als optimale Konfiguration und/oder zugehöriger Daten an eine Recheneinheit.

Dementsprechend können eine oder mehrere Verfahrensschritte nach der Bestimmung der optimalen Konfiguration als Ausgabe des erfindungsgemäßen Verfahrens eingeleitet werden. Die Verfahrensschritte können gleichzeitig, nacheinander oder auch stufenweise durchgeführt werden.

Jegliche Eingabedaten oder Ausgabedaten können an beliebige Recheneinheiten, wie eine Anzeige-, eine Verarbeitungs-, oder eine Speichereinheit übertragen werden. Die optimale Konfiguration kann als Ausgabe bereitgestellt werden. Ferner kann die optimale Konfiguration selbst oder in Form einer entsprechenden Nachricht oder Mitteilung an eine Recheneinheit übertragen werden und/oder mittels einer Anzeigeeinheit der Recheneinheit einer Person wie Nutzer angezeigt werden. Nach erfolgreicher Übertragung kann das technische System anhand der optimalen Konfiguration ausgestaltet werden.

Der Vorteil liegt darin, dass eine oder mehrere mögliche Architekturlösungen des technischen Systems zur Erreichung des Kriteriums ermittelt werden. Diese Architekturlösungen können ferner vor ihrer Umsetzung bewertet werden.

Ferner betrifft die Erfindung ein technisches System zum Durchführen des obigen Verfahrens.

Die Erfindung betrifft ferner ein Computerprogrammprodukt mit einem Computerprogramm, das Mittel zur Durchführung des oben beschriebenen Verfahrens aufweist, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie beispielsweise eine Industriesteuerungs-PC oder eine Speicherprogrammierbare Steuerung oder ein Programmable Logic Controller, kurz PLC, oder ein Mikroprozessor für eine Smartcard oder dergleichen in Frage.

### 4. Kurze Beschreibung der Zeichnungen

In der folgenden detaillierten Beschreibung werden vorliegend bevorzugte Ausführungsformen der Erfindung weiter beschrieben mit Bezug auf die folgenden Figuren.
FIG 1 zeigt ein schematisches Ablaufdiagramm des erfindungsgemäßen Verfahrens.
FIG 2 zeigt eine schematische Darstellung des technischen Systems gemäß einer Ausführungsform der Erfindung.

### 5. Beschreibung der bevorzugten Ausführungsformen

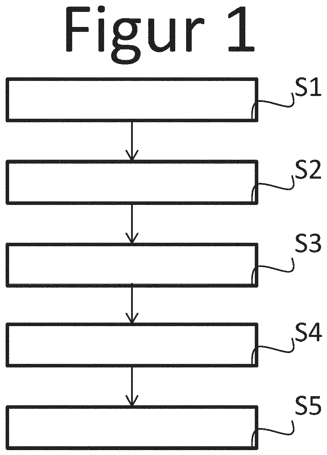

Im Folgenden werden bevorzugte Ausführungsformen der vorliegenden Erfindung in Bezug auf die Figur 1 beschrieben.

Figur 1 stellt ein Ablaufdiagramm des erfindungsgemäßen Verfahrens mit den Verfahrensschritten S1 bis S5 schematisch dar.

In einem ersten Verfahrensschritt wird die mindestens eine Bedingung bereitgestellt S1. In einem zweiten Verfahrensschritt wird die mindestens eine vordefinierte Anforderung für jede Konfiguration der Mehrzahl der Konfigurationen bewertet S2. In einem weiteren Verfahrensschritt wird das mindestens eine Ausfallrisiko des technischen Systems für jede Konfiguration der Mehrzahl der Konfigurationen bewertet S3. In einem weiteren Verfahrensschritt wird die mindestens eine Konfiguration aus der Mehrzahl der Konfigurationen auf Basis der mindestens eine bewertete Anforderung und des mindestens einen bewerteten Ausfallrisikos unter Einhaltung der mindestens einen Bedingung und Berücksichtigung von mindestens einem vordefinierten Kriterium bestimmt S4. In einem letzten Verfahrensschritt wird die bestimmte mindestens eine Konfiguration als optimale Konfiguration bereitgestellt S5.

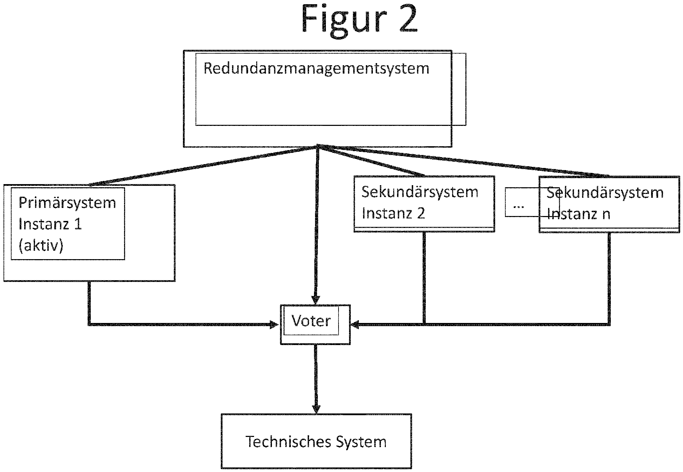

Figur 2 zeigt eine schematische Darstellung der Steuerung eines technischen Systems gemäß einer Ausführungsform der Erfindung. Beispielhaft sind das Primärsystem und die vorhandenen Sekundärsysteme dargestellt. Diese sowie ein Voter werden durch eine übergeordnete Komponente, die das obige Verfahren implementiert, gesteuert, um das Verfahren zu implementieren und das technische System zu steuern.

### Anwendungsbeispiele

- Kontextabhängige Änderung der Redundanzart
   beispielsweise bei einer geänderten Randbedingung

Ein autonomer Zug fährt in einen Streckenabschnitt mit einer erhöhten Sicherheitsanforderung, beispielsweise in einen Tunnel oder auf eine Brücke. In diesem Streckenabschnitt ist das Anhalten des autonomen Zugs aufgrund eines Ausfalls der Steuerung nicht sicher oder gefährdet. Daher wird aus der zuvor ausreichenden kalten Redundanz oder der warmen Redundanz auf eine heiße Redundanz für das Steuerungssystem des autonomen Zugs umgeschaltet. Die heiße Redundanz ist somit die optimale Konfiguration für den autonomen Zug. Dadurch kann das redundante technische System rechtzeitig hochgefahren und synchronisiert werden, so dass bei Ausfall des Primärsystems das redundante Sekundärsystem als hot-standby System nahtlos übernehmen kann.

Nach Verlassen dieses Streckenabschnitts kann die Redundanzart wieder von heißer auf warme oder kalte Redundanz geändert werden. Andere Beispiele sind erhöhte Ausfallrisiken durch bekannte oder erwartbare höhere Nutzungsanforderungen an das technische System.
- Erhöhung des Redundanzgrades um ein beanspruchtes technisches System Beispielseise ist das technische System bereits stark beansprucht und nahe am Lebensdauerende angekommen. Somit ist das Ausfallrisiko des technischen Systems erhöht. Daher wird die Nutzung des technischen Systems angepasst. Das technische System wird in Kalt-Standby oder Warm-Standby betrieben, bevorzugt abhängig vom Anwendungsfall. Dadurch kann ein bestehendes Ungleichgewicht im Nutzungsanteil des Primärsystems und des Sekundärsystems genutzt oder auch bewusst erzeugt werden.

## Patentansprüche

1. Computer-implementiertes Verfahren zum Bestimmen von mindestens einer Konfiguration aus einer Mehrzahl von Konfigurationen für ein technisches System, wobei das technische System eine Mehrzahl von Hardwarekomponenten und/oder Softwarekomponenten aufweist, wobei
die Mehrzahl der Konfigurationen mindestens eine Konfiguration für ein redundantes technisches System aufweist, wobei
das redundante technische System ein Primärsystem und mindestens ein Sekundärsystem als mindestens eine Instanz des Primärsystems aufweist,
aufweisend die Schritte:
a. Bereitstellen von mindestens einer Bedingung (S1);
b. Bewerten von mindestens einer vordefinierten Anforderung für jede Konfiguration der Mehrzahl der Konfigurationen (S2);
c. Bewerten von mindestens einem Ausfallrisiko des technischen Systems für jede Konfiguration der Mehrzahl der Konfigurationen (S3);
d. Bestimmen der mindestens einen Konfiguration aus der Mehrzahl der Konfigurationen auf Basis der mindestens einen bewerteten Anforderung und des mindestens einen bewerteten Ausfallrisikos unter Einhaltung der mindestens einen Bedingung und Berücksichtigung von mindestens einem vordefinierten Kriterium (S4); und
e. Bereitstellen der bestimmten mindestens einen Konfiguration als optimale Konfiguration (S5).

2. Computer-implementiertes Verfahren nach Anspruch 1, wobei die mindestens eine Bedingung anwendungsspezifisch oder abhängig vom redundanten technischen System ist.

3. Computer-implementiertes Verfahren nach Anspruch 1 oder Anspruch 2, wobei die mindestens eine vordefinierte Anforderung eine Anforderung ist, ausgewählt aus der Gruppe bestehend aus ein Sicherheitsziel, ein Verfügbarkeitsziel und ein Zuverlässigkeitsziel.

4. Computer-implementiertes Verfahren nach einem der vorhergehenden Ansprüche, wobei die Bewertung der mindestens einen vordefinierten Anforderung eine allgemeine Bewertung und/oder eine spezifische Bewertung ist.

5. Computer-implementiertes Verfahren nach Anspruch 4, wobei die allgemeine Bewertung auf einer Risikoanalyse und/oder einer Gefährdungsanalyse basiert.

6. Computer-implementiertes Verfahren nach Anspruch 4, wobei die spezifische Bewertung das Aktualisieren der mindestens einen Anforderung umfasst, bevorzugt unter Berücksichtigung von Kontextdaten.

7. Computer-implementiertes Verfahren nach einem der vorhergehenden Ansprüche, wobei die Bewertung des mindestens einen Ausfallrisikos eine allgemeine Bewertung und/oder eine spezifische Bewertung ist.

8. Computer-implementiertes Verfahren nach Anspruch 7, wobei die allgemeine Bewertung eine Systemanalyse und/oder eine modellbasierte Bewertung ist.

9. Computer-implementiertes Verfahren nach Anspruch 7, wobei die spezifische Bewertung das Aktualisieren der allgemeinen Bewertung des mindestens einen Ausfallrisikos auf Basis von mindestens einer Modellvorhersage bezüglich einer sicher bekannten oder einer mit Unsicherheiten behafteten Systemanwendung umfasst, bevorzugt unter Berücksichtigung von Kontextdaten.

10. Computer-implementiertes Verfahren nach Anspruch 9, wobei die Aktualisierung mittels Maschinellem Lernen erfolgt.

11. Computer-implementiertes Verfahren nach einem der vorhergehenden Ansprüche, weiterhin aufweisend
- Ausgeben der bestimmten mindestens eine Konfiguration als optimale Konfiguration und/oder zugehöriger Daten auf einer Anzeigeeinheit,
- Speichern der bestimmten mindestens eine Konfiguration als optimale Konfiguration und/oder zugehöriger Daten in einer Speichereinheit, und/oder
- Übermitteln der bestimmten mindestens eine Konfiguration als optimale Konfiguration und/oder zugehöriger Daten an eine Recheneinheit.

12. Technisches System zum Durchführen des Verfahrens nach einem der vorhergehenden Ansprüche.

13. Computerprogrammprodukt mit einem Computerprogramm, das Mittel zur Durchführung des Verfahrens nach einem der Ansprüche 1 bis 11 aufweist, wenn das Computerprogramm auf einer programmgesteuerten Einrichtung zur Ausführung gebracht wird.
